(19) Europäisches Patentamt

European Patent Office

Office européen des brevets

(11) **EP 1 182 429 A2**

(12) **EUROPEAN PATENT APPLICATION**

(43) Date of publication:
**27.02.2002 Bulletin 2002/09**

(51) Int Cl.7: **G01D 5/22**, G06G 7/48

(21) Application number: **01306892.9**

(22) Date of filing: **14.08.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **25.08.2000 GB 0021111**

(71) Applicant: **Lucas Industries Limited
West Midlands B90 4LA (GB)**

(72) Inventor: **Shipley, Adrian
Dudley, West Midlands DY1 2JU (GB)**

(74) Representative: **Beck, Simon Antony et al
Withers & Rogers, Goldings House, 2 Hays Lane
London SE1 2HW (GB)**

(54) **Signal processor**

(57)     A signal processor for a linear or rotary variable displacement transducer is provided in which input channels A and B are sequentially applied to a shared integrator such that any gain or offset errors introduced by the integrator are common to both channels and can be removed by subtraction or other signal processing actions.

Fig.1.

**Description**

The present invention relates to a signal processor, and in particular, but not exclusively, to a signal processor suitable for use with a linear or rotary variable displacement transducer, hereinafter referred to as a variable displacement transducer (VDT).

A linear or rotary variable displacement transducer is a transducer that has a moveable magnetic core disposed in such a way that it can vary the degree of coupling between a primary drive coil and two secondary coils. There is little or no frictional contact between the core and the coils and consequently the transducer enjoys an exceptionally long in service life and can be used in harsh environments.

US 4,904,921 discloses a monolithic interface circuit for use with an LVDT. The circuit which involves a large number of comparators, adders, and amplifiers, acts to give an analogue voltage output representative of the difference between the first and second input signals divided by the sum of the first and second input signals.

This device works wholly in the analogue domain and as such requires the components in each signal path to be carefully balanced and matched in order to avoid introducing errors. This degree of matching required is almost inevitably only provided in monolithically integrated devices. Such an approach can make device costs prohibitively expensive where only small device numbers are required, and also makes in-circuit modification difficult.

According to a first aspect of the present invention, there is provided a signal processor, comprising:

an integrator having an input and an output;
a comparator;
a switching arrangement; and
a reference signal;

wherein the comparator is responsive to an input signal and an output of the integrator, and an output of the comparator is supplied to the switching arrangement which is arranged such that when the magnitude of the input signal is greater than the magnitude of the output of the integrator the input signal is supplied to the input of the integrator, and when the magnitude of the input signal is less than the magnitude of the output of the integrator the reference signal is applied to the input of the integrator, thereby causing the output of the integrator to change at a constant rate.

It is thus possible to provide a signal processor which can act to integrate a signal during a first phase of operation, and in which the integrator can then be discharged at a constant rate. The time to discharge the integrator is directly related to the integral of the input signal formed during the first phase of operation.

Preferably a first summer is provided such that the input signal is received at one of the inverting and non-inverting inputs thereof, preferably the non-inverting input, and an output of the integrator is received at another input thereof, preferably the inverting input, and the output of the summer is connected to the input of the integrator.

It is thus possible to provide a signal processor in which the processor acts to integrate a signal within a closed loop during a first phase of operation, thereby forming a first order lag. When a peak value is reached the integrator is discharged at a constant rate and the time to discharge is directly related to the RMS value of the input signal.

Advantageously the output of the first summer is connected to the input of the integrator via a first electronically controlled switch. The switch may be closed only when a comparator determines that the input signal to the integrator is above a predetermined value, for example zero volts. Thus, if the comparator is responsive to the output of the first summer, it can determine when the magnitude of the output of the integrator is greater than the magnitude of the input signal. Once the first switch is opened, a second switch may connect the integrator to a constant voltage source or a constant current source such that the integrator forms a ramp generator, in which the integrator ramps towards zero at a constant rate. The time for which the integrator ramps towards zero is directly proportional to the integrated value of the input signal. Once the integrator has reached zero volts, the second switch may be opened, causing the integrator to hold at zero volts, subject to errors resulting from drift.

Preferably the signal processor is operated in a time division multiplexed manner to receive the inputs from a plurality of channels. This has the advantage in that the sharing of the signal processor means that gain variations or offsets are effectively common to all of the processed signals and may be removed by subsequent mathematical processing. Likewise reference or zero values are not critical as they are common to the multiplexed input signal.

A signal processor constituting an embodiment of the present invention may be used to receive the signals from a VDT. The signals from each coil of the VDT may be buffered by an instrumentation amplifier in order to remove common mode interference. The output of the buffer may then be DC blocked and supplied via channel select switches to the input of the first summer. Channel select switches may be driven by comparators responsive to the output of the buffers such that the signal therefrom becomes half wave rectified. The switches may also be responsive to switch select signals derived from a control and/or computational unit in order to ensure correct time division multiplexed operation of the integrator and associated components. However, if the impedance of each coil of the VDT is sufficiently low, then the output circuitry can be significantly simplified with the coils being connected to the input of a amplifier in an alternating manner via a suitable change-over switch arrangement. The change-over switch arrangement is preferably implemented by one or more solid state device.

The computational unit may be arranged to form a ratio of the signal levels in the first and second channels in order to derive a measurement of the position of a device connected to the VDT. The data processing device may act to normalise the signals against input drive variation by forming a measurement derived as the difference between first and second channels divided by the sum of the first and second channels.

It is thus possible to provide a device in which the only signal paths not common to both channels are those through the instrumentation buffer and amplifier and the channel select switches. Indeed, in one embodiment of the present invention the only non-common path occurs in the channel select switches. All subsequent signal processing is performed in shared components, thereby ensuring that DC offsets and gain variations are cancelled out. It is thus possible to provide a highly accurate signal processor for use with a VDT, wherein the signal processor can be built from discrete components and hence does not incur the cost and complexity of bespoke integrated circuit fabrication. Advantageously the present invention is implemented using readily available differential amplifiers. Such components may be regarded as standard as they may belong to families of components which have been available for many years. The use of such standard components has the advantages that such components are readily obtainable to military specifications and consequently are able to work over a wide range of temperatures, that the components are available at reasonable cost and are not subject to obsolescence issues. That is, the devices will be available for the foreseeable future.

The present invention will further be described, by way of example, with reference to the accompanying drawings, in which:

Figure 1 is a schematic diagram of a signal processor constituting an embodiment of the present invention;

Figure 2 illustrates the components surrounding the integrator in greater detail;

Figure 3 compares the wave form of an input signal at the input to the integrator block with the output of the integrator;

Figure 4 shows the effective circuit surrounding the integrator during a first mode of operation;

Figure 5 schematically illustrates a VDT in combination with a signal driver and a signal processor constituting an embodiment of the present invention; and

Figure 6 schematically illustrates how the integrator can complete it's discharge within one half cycle of the drive wave form; and

Figure 7 shows an alternative input buffer arrangement.

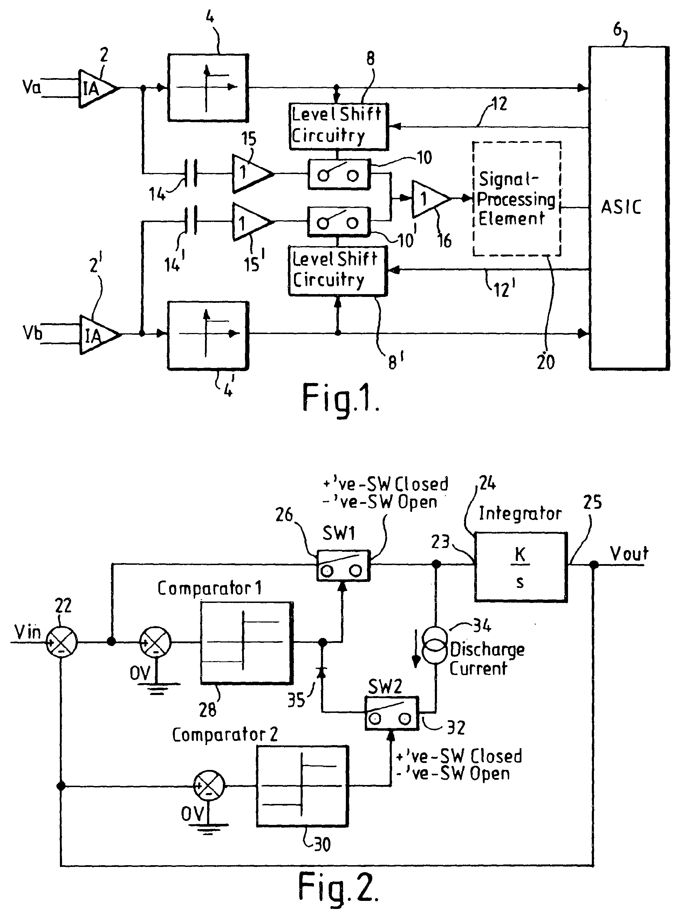

The signal processor shown in Figure 1 comprises first and second instrumentation amplifiers 2 and 2' arranged to receive input signals Va and Vb, respectively, from first and second coils of a VDT. The channels are essentially identical, so only one will be described in detail. The output of the differential amplifier 2 is supplied to the input of a comparator 4 which operates to assert a signal when the output of the amplifier 2 is greater than zero volts. The output of the comparator 4 is provided to a first input of a control circuit 6 and is also provided to a drive circuit 8 of an electronic switch 10. The drive circuit 8 also receives a switch select signal via a control line 12 from the control circuit 6.

The output of the differential amplifier 2 is also supplied via a DC blocking capacitor 14 and a buffer 15 to a first terminal of the switch 10. An output of the switch 10 is supplied to a further buffer 16.

The second channel is similarly constructed, with the outputs of both electronic switches 10 and 10' being connected to the buffer 16.

The control device 6, acting via the control lines 12 and 12', can ensure that the switches 10 and 10' are never closed at the same time. Thus, each switch 10 and 10' can only be closed when two conditions are simultaneously satisfied, these are that the respective input wave form is in a positive half cycle as determined by the comparators 4 and 4', and that the channel select signal for the given channel has been asserted by the controller 6. Thus positive half cycles from either channel can be selectively presented to an integrator block 20.

Figure 2 schematically illustrates the details of the integrator block 20 in greater detail. The output of the buffer 16 is provided to a non-inverting input of a summer 22. The summer can be implemented using a differential amplifier. An output of a summer is provided to an input 23 of an integrator 24 via a electronically controllable switch 26. An output 25 of the integrator 24 is provided to the inverting input of the first summer 22. A comparator 28 also receives an output from the summer 22. The comparator determines whether the output of the summer 22 is greater than or less than zero volts, and if it is greater than zero volts, sends a signal to a control terminal of the switch 26 in order to cause it to close. However, if the output of the summer 22 is less than zero volts, then the comparator causes the switch 26 to open. Once the output of the comparator 26 goes low, a discharge path for the integrator opens via constant current generator 34, switch 32 and diode 35. The current flowing along this path is sunk by the output stage of the comparator 28.

When the output of the comparator 28 is high, this current path is closed and the diode 35 acts to block current from flowing from the output of the comparator 28 to the input of the integrator 24.

The constant discharge current means the integrator ramps down at a constant rate. A further comparator 30 has its input connected to the output of the integrator 24 in order to determine whether the integrator's output is greater than or less than zero volts. The comparator 30 closes the switch 32 when the output of the comparator is positive and opens the switch when the output of the comparator is negative. Thus once the comparator ramps down to zero (or slightly negative) the switch 32 is opened, breaking the discharge path and causing the integrator output to be held at zero in readiness for the next integration.

In use, the controller 6 selects one or other of the channels to be supplied to the processing element 20. The processing element 20 effectively acts to sample and hold the RMS voltage of the incoming signal, and once this has been held to linearly discharge it to zero volts. The time taken to discharge is linearly related to the RMS voltage of the incoming wave form. Furthermore, the architecture is such that the components used to measure the RMS value of the incoming voltage, the hold circuit and the discharge circuitry all use common (shared) components. Therefore systematic errors can be removed through ratiometric processing.

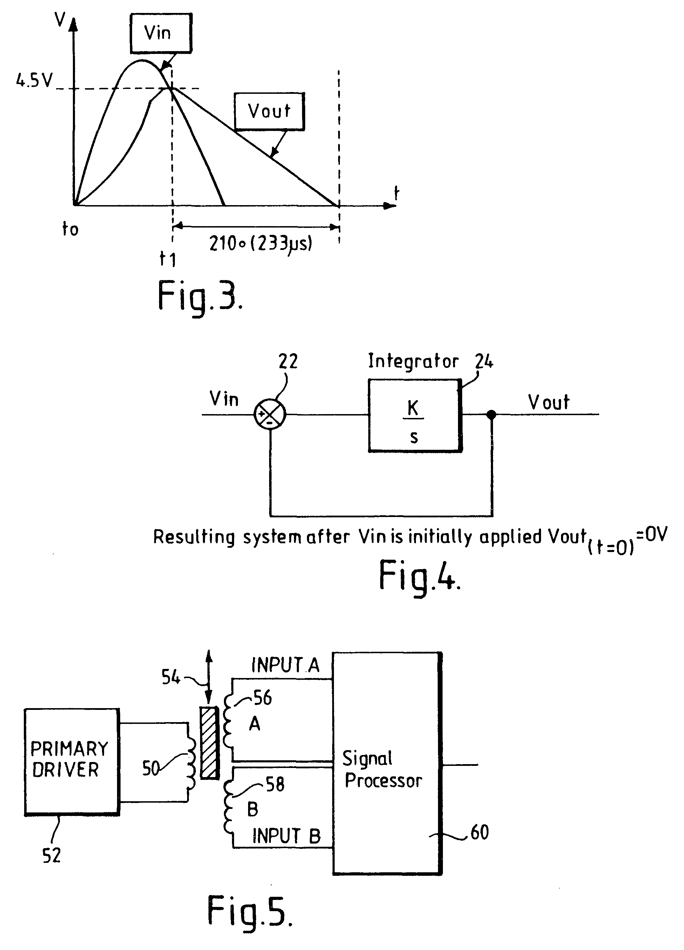

As shown in Figure 3 a positive half cycle is applied to the input of the summer 22 beginning at Time $= T_0$. Assuming that the output of the integrator starts at zero volts at Time $= T_0$, then switch 26 is closed and switch 32 is also closed thereby giving rise to an effective circuit as shown in Figure 4.

This forms a simple first order control where:

$$\frac{Vout}{Vin} = \frac{K}{K+s}$$

This forms a low pass filter. The output from the filter will rise until a peak is reached, until which time the output wave form will start to reduce after the peak occurring at Time $T = T_1$. The fall is due to the fact that the input to the integrator is now negative. This negative input voltage forces the output of the first comparator 28 negative thereby causing the switch 26 to open. This represents the moment at which a counter within the control circuit 6 is started. The peak output voltage is now stored within the integrator with Vout being positive. The output of the second comparator 30 is also positive thereby keeping the switch 32 closed. The fact that the first comparator 28 has a negative output means that a discharge current can flow from the input of the integrator via the constant current source, the switch and to the comparator 28. Thus the output of the integrator reduces linearly towards zero. When the output voltage passes through zero volts, the output of the comparator 30 will be forced negative, thereby opening the switch 32.

With the switch 32 open, the output of the integrator Vout will remain at zero volts. The time at which the output of the comparator 30 changes indicates when the counter in the control circuit 6 should be stopped. The value in the counter is representative of the RMS value of the input signal. The counter is zeroed each time it is used.

The controller 6 operates the switches 8 and 8' such that alternative half cycles of the input signals, Va and Vb, are presented to the integrator circuit forming a time division multiplex signal, and thus both signals are subject to the same offset and gain and consequently any errors resulting from offset can be removed through ratiometric calculation. Furthermore, phase errors between the signals Va and Vb are avoided because each time measurement can be completed prior to the subsequent signal becoming positive. This has limitations on the allowed phase error between the signals Va and Vb. However, this can be accommodated through suitable selection of components.

The accuracy of such a system is to a certain extent a trade-off between the counter-clock frequency and the time taken to make a measurement.

Looking at the input wave form in terms of a phase diagram, the RMS value will occur after 135° of the sinusoidal signal (since sine(135°) = 0.7071) furthermore if it is assumed that a maximum permissible phase error between Va and Vb is limited, for example to 15°, then it can be seen that a phase time equal to 210° (360 - 135 - 15) is allowed.

Assuming that the VDT is driven at a constant frequency, for example 2.5 kHz, then a measurement window of 233 microseconds is allowed. Measurements within this window can be resolved to a measurement accuracy depending on the system clock, for example, if a 24 MHz system clock is used, then errors in time measurement of the order of 41 nanoseconds will result.

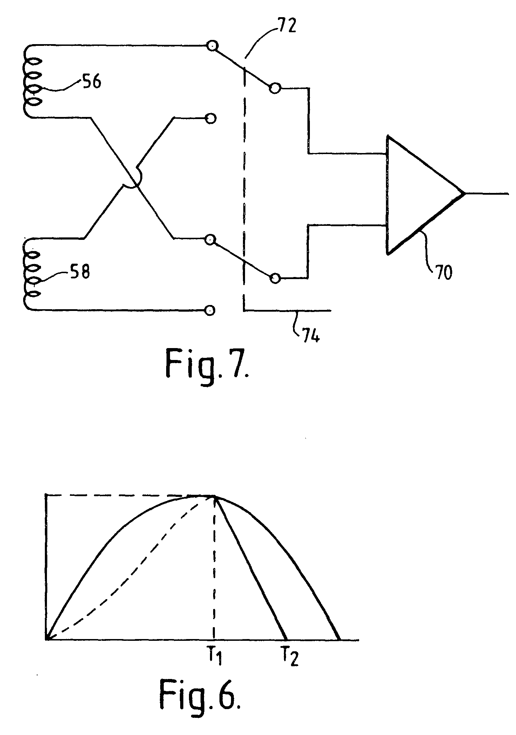

It is, of course, possible to set the rate of discharge of the integrator (as controlled by the constant current generator 34) such that the discharge occurs quite rapidly. Figure 6 illustrates an arrangement in which the discharge current is selected such that the integrator should ramp down to zero volts before the half cycle of the input wave form is completed. In order to do this, the circuit is modified such that once the discharge portion occurring between time T1 and time T2 has commenced the electronically controllable switch 26 is held open thereby preventing reconnection of the input signal Vin of the integrator 24.

It is worth noting that using a low pass filter arranged such that the output thereof lags the input by a substantial amount (to the extent that peak value of the filter is the RMS value of the wave form) makes the signal processor immune to high degrees of noise. This is particularly useful since the VDT may be used in a noisy environment.

Once the discharge times for each of the measurements Va and Vb have been acquired via the processing circuit 6, it may then resolve the transducer position, simultaneously removing any offset or gain errors, by calculating the displacement in accordance with the formula

$$\text{Displacement} = (Va - Vb) \div (Va + Vb)$$

Figure 5 schematically illustrates an arrangement in which a primary coil 50 is driven with a sinusoidal signal by a driver 52. A moveable core 54 varies the degree of coupling between the coil 54 and secondary coils 56 and 58 in channel A and channel B, respectively of the transducer circuit. The coils are connected to the inputs of a signal processor constituting an embodiment of the present invention.

Under certain circumstances, for example where the impedance's of the coils 56 and 58 are sufficiently low, then the individual amplifiers 2, 2', the DC blocking capacitors 14 and 14' and buffers 15 and 15' may be dispensed with and a modified circuit of the type shown in Figure 7 may be used instead. Here the coils 56 and 58 are connected to the input of a common amplifier 70 via a changeover switch 72. The switch 72 is implemented in solid state circuitry and its operation is controlled by the control circuit 6 via a control line 74. If necessary, the output of the amplifier 70 can be tested with a comparator in order to ensure that it is positive. The output of the amplifier 70 may only be provided to the input of the integrator 24 when the output of the amplifier is positive. This additional control function may be provided by a further electronic switch, or by a modification of the drive circuitry surrounding switch 26 shown in Figure 2. Thus, for example, the controlled switch 26 may be supplied by an AND gate (not shown) such that the switch only closes when the output of the comparator 28 is positive and when the output of the amplifier 70 is positive.

**Claims**

1. A signal processor **characterised by** comprising

   an integrator (24) having an input and an output;
   a comparator (28);
   a switching arrangement (26, 32); and
   a reference signal (34);

   wherein the comparator is responsive to an input signal (Vin) and an output (25) of the integrator (24), and an output of the comparator (28) is supplied to the switching arrangement (26, 32) which is arranged such that when the magnitude of the input signal (Vin) is greater than the magnitude of the integrator output, the switching arrangement assumes a first mode in which the input signal is supplied to the input (23) of the integrator; and such that the reference signal (34) is supplied to the input (23) of the integrator in a second mode of operation when the magnitude of the input signal is less than the magnitude of the output (25) of the integrator (24) thereby causing the output of the integrator to change at a constant rate.

2. A signal processor as claimed in claim 1, **characterised by** further comprising a first summer (22) arranged to receive the input signal (Vin) at a first one of the non-inverting input and an inverting input thereof and to receive an output (25) of the integrator (24) at the other one of the non-inverting input and the inverting input, and having an output connected to the input of the integrator (24).

3. A signal processor as claimed in claim 1 or 2, **characterised by** further comprising pre-processing means for providing only predetermined half cycles of a cyclical input signal to the signal processor.

4. A signal processor as claimed in claim 3, in which the integrator (24) is zeroed prior to the commencement of a predetermined half cycle, and in which integration commences with the start of the half cycle.

5. A signal processor as claimed in claim 4, in which during the second mode the integrator (24) is ramped towards zero, and the time taken to reach zero is measured.

6. A signal processor as claimed in claim 5, in which the input (23) of the integrator (24) is connected to a constant current source or a constant voltage source during the second mode.

7. A signal processor as claimed in any one of the preceding claims, in which the signal processor (20) is arranged to process a plurality of signals in a time multiplexed manner.

8. A signal processor as claimed in any one of the preceding claims further comprising first and second input channels, wherein each channel includes a DC blocking element (14, 14').

9. A signal processor as claimed in claim 8, each channel further comprising a comparator (4, 4') responsive to the signal in the channel and a switch (10, 10') responsive to an output of the comparator such that the switch (10, 10') is only closed during predetermined half cycles of the input wave form.

10. A signal processor as claimed in any one of the preceding claims, further comprising a processing and control device (6) for receiving the output (25) of the integrator (24) and counting the time period it takes to ramp down in the second mode, and for processing the timing signals in order to form an output signal.

**11.** A signal processor as claimed in claim 10, **characterised in that** the processing and control device is further arranged to select the channels in a time multiplexed manner.

**12.** A signal processor as claimed in claim 7, in combination with a VDT, **characterised in that** the signal processor is arranged to form an output representative of the difference between the first and second signals divided by the sum of the first and second input signals.

**13.** A signal processor as claimed in any one of the preceding claims, in which the integrator forms a low pass filter whose time constant is selected such that for a predetermined frequency corresponding to a drive frequency for a primary coil of a VDT associated with the signal processor, the magnitude of the integrator output when it exceeds the magnitude of the input signal is substantially proportional to the RMS value of the input signal.

EP 1 182 429 A2

Fig.1.

Fig.2.

7

## Fig.3.

4.5V

Vin

Vout

to

t1

210∘(233µs)

## Fig.4.

22    Integrator    24

Vin

$\frac{K}{s}$

Vout

Resulting system after Vin is initially applied Vout$_{(t=0)}$=0V

## Fig.5.

54

INPUT A

56

A

PRIMARY DRIVER

50

Signal Processor

52

58

B

INPUT B

60

EP 1 182 429 A2

Fig. 7.

Fig. 6.